# FASCICULE DE BREVET EUROPEEN

(11) **EP 0 340 638 B1**
(45) Date de publication et mention de la délivrance du brevet: **11.08.1993**
(21) Numéro de dépôt: 89107649.9
(22) Date de dépôt: 27.04.1989
(51) Int. Cl.: B23P 19/02, B25B 27/02, F01D 5/00

(54) **Procédé et dispositif pour l'extraction de paquets d'ailettes de turbine à vapeur**
Verfahren und Vorrichtung, zum Herausziehen der Pakete von Dampfturbinenschaufeln
Method and device for extracting blades packs of steam turbine vanes

(30) Priorité: 03.05.1988 FR 8805927
(43) Date de publication de la demande: 08.11.1989
(73) Titulaire: GEC ALSTHOM SA, 75116 Paris (FR)
(72) Inventeur: Comensoli, Jean-Claude 2, Rés.Jean-Sébastien Bach, F-95500 Gonesse (FR)
(74) Mandataire: Weinmiller, Jürgen

(56) Documents cités:
- EP-A- 0 055 415
- DE-B- 1 098 960
- US-A- 4 279 068
- US-A- 4 429 857
- US-A- 4 442 593

## Description

La présente invention concerne un procédé pour extraire des paquets d'ailettes du type liées entre elles par des bandages dans lequel chaque ailette comporte un pied introductible radialement dans un disque support pour être fixé à ce disque par des broches et au-dessus du pied un méplat constitué de faces orthogonales à l'axe du disque.

Un tel procédé connu dans l'art antérieur est utilisé pour extraire les ailettes du disque sans les abîmer, lors de la révision du rotor par exemple d'une turbine à vapeur. Après réparation des disques du rotor on peut réemployer les paquets d'ailettes non abimées lors de l'extraction.

Le prix de revient des ailettes étant élevé, il est en effet intéressant de pouvoir les réemployer.

Dans le procédé connu on enlève les broches fixant les pieds des ailettes au disque. Mais certaines broches en raison de la corrosion sont très difficile à extraire de leur logement.

On fore donc les broches qu'on ne peut extraire en laissant une mince couche périphérique de façon à ne jamais abîmer les parois du logement ce qui obligerait à abîmer les ailettes et à augmenter le diamètre des trous.

Il y a donc une résistance due à la corrosion et au reste des broches lorsqu'on extrait les paquets d'ailettes.

Il est connu de venir enserrer les pales des ailettes puis d'extraire le paquet en tirant radialement sur ces pales. Mais ces pales ont une forme vrillée et la prise n'est pas aisée si bien qu'il est nécessaire de serrer très fort les pales et souvent les ailettes sont déformées lors de l'extraction.

Il est connu du document DE-B-1 098060 de fixer des ailettes sur la roue par des broches constituées de deux parties, une partie centrale venant se loger dans une seconde partie constituée par une bague en acier durci. Il est ainsi plus facile par forage d'enlever la broche.

Le procédé selon l'invention permet une extraction sans risque de déformer les pales, ni le bandage liant les ailettes du paquet car on vient serrer les méplats de toutes les ailettes du paquet.

De plus en prenant appui sur le disque lui-même on peut extraire le paquet en suivant une direction radiale.

On vient serrer les méplats des diverses ailettes avec une force sensiblement égale ce qui évite qu'une ailette reste en place pendant une partie de l'extraction endommageant le bandage.

La présente invention concerne également un appareil pour appliquer le procédé d'extraction selon l'invention. Cet appareil comportant une pince munie de deux leviers articulés autour d'un axe comprenant chacun un bras arrière et un bras avant, des moyens pour écarter les bras arrière l'un par rapport à l'autre de façon à rapprocher les bras avant l'un vers l'autre, chaque bras avant portant au voisinage de son extrémité un mors de serrage, les mors de serrage desdits bras avant étant situés en face l'un de l'autre et destinés au serrage de part et d'autre des méplats des ailettes à extraire et lesdits bras avant étant munis de vérins à leurs extrémités permettant d'écarter l'appareil des points d'appui des vérins en restant dans un plan perpendiculaire à l'axe d'articulation.

La figure 1 représente une vue de face d'une ailette à extraire.

La figure 2 représente un mode particulier de réalisation de l'appareil selon l'invention.

La figure 3 représente une vue coupe partielle de la partie avant de l'appareil de la figure 3.

La figure 4 représente une perspective d'un mors de l'appareil selon l'invention.

La figure 5 représente l'extraction d'un paquet d'ailettes. Les figure 6 et 7 représentent une vue de face et une coupe d'un mors utilisé dans l'appareil de la figure 2.

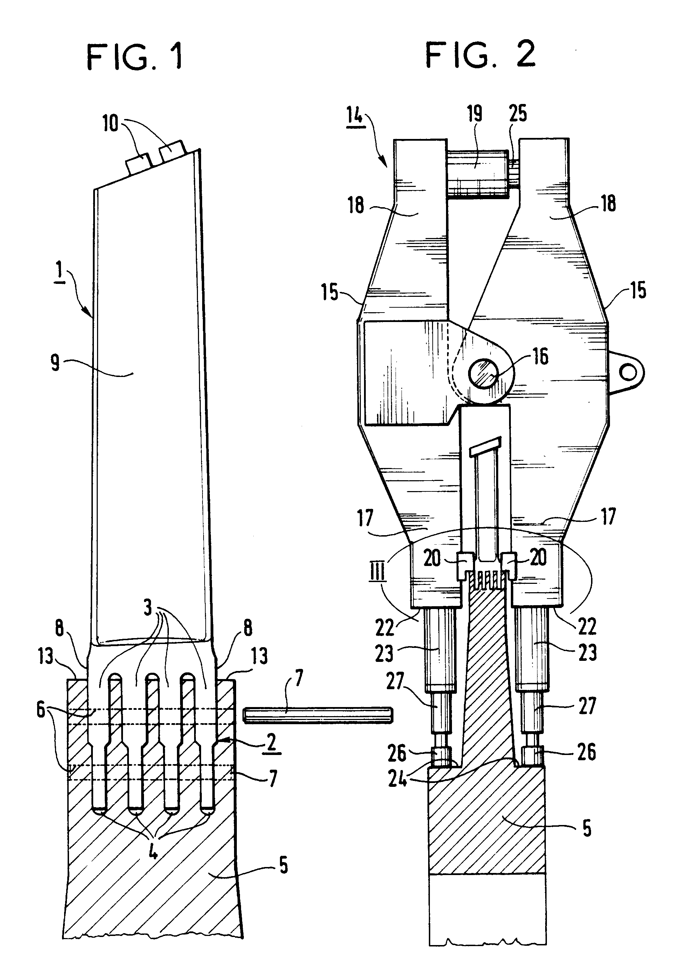

Le type d'ailette représenté à la figure 1 est utilisé dans certains étages de turbine à vapeur. Chaque ailette 1 comporte un pied 2 muni de doigts 3 qui peuvent être introduits radialement dans des rainures 4 circonférentielles d'un disque 5.

Ces doigts 3 sont traversés par des orifices 6 dans lesquels on introduit des broches 7 pour fixer les pieds 2 sur les disques 5.

Au-dessus du pied 2, l'ailette 1 comporte un méplat 8 de faible hauteur dont les deux faces planes sont dans des plans orthogonaux par rapport à l'axe du disque 5.

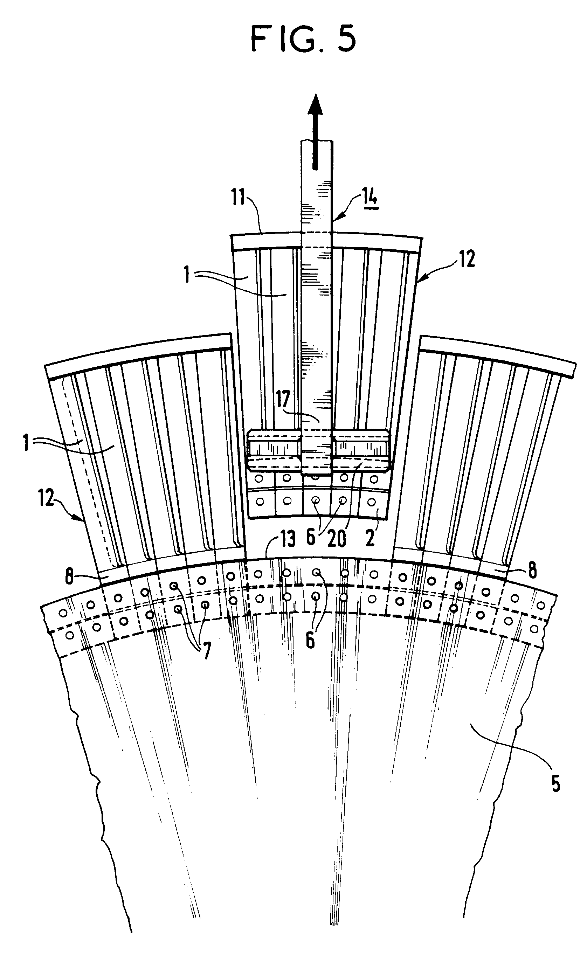

Au-dessus du méplat 8, l'ailette 1 comporte une pale 9 vrillée terminée par des picots 10 servant à la fixation d'un bandage 11 réunissant plusieurs ailettes 1 entre elles pour former un paquet 12 (voir figure 5).

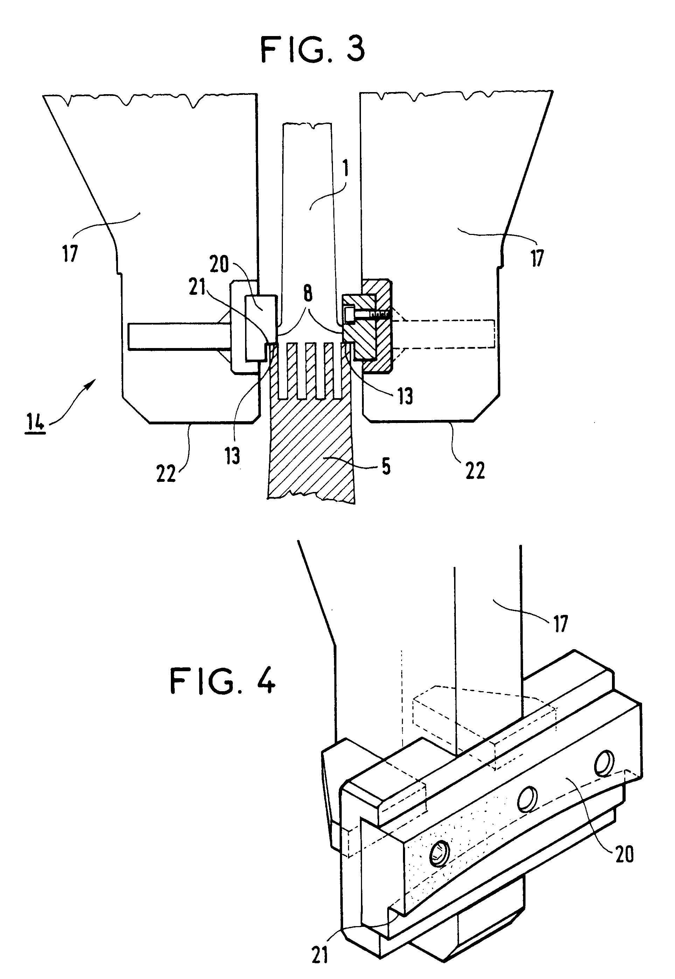

L'appareil 14 (voir figures 2 à 4) pour extraire les paquets 12 d'ailettes comprend deux leviers 15 articulés autour d'un axe 16. Chaque levier 15 comprend un bras avant 17 et un bras arrière 18. Entre les bras arrière 18 est disposé un vérin 19 qui sert à écarter ces bras 18.

Dans les parties des bras avant 17 se faisant face au voisinage de leurs extrémités 22 sont logés des mors 20. Chaque mors 20 présente un décrochement 21 dont le fond a une forme concave (par exemple portion de cylindre, ou dièdre obtus) qui vient s'appliquer sur le disque 5 de part et d'autre des méplats 8 des ailettes 1 sur les bords 13.

A chaque extrémités 22 des bras avant 17 sont disposés des vérins 23 orientés radialement et qui viennent prendre appui sur le fût 24 du disque 5.

Pour extraire un paquet 12 d'ailettes, on retire les broches 7 fixant les pieds 2 des ailettes 1 du paquet 12 au disque 5. Si certaines broches 7 restent bloquées on les fore de façon à n'en laisser qu'une mince couche périphérique.

On vient alors positionner l'appareil 14 avec les mors 20 posés sur les bords 13 du disque 5 situés de part et d'autre des méplats 8 des ailettes 1 à extraire. L'axe 16 est alors disposé parallèlement à l'axe du disque 5. On alimente le vérin 19 de façon que sa tige 25 sorte et écarte les bras arrière 18, ce qui a pour effet que les bras avant 17 se rapprochent et viennent serrer les méplats 8 des ailettes 1.

Les talons 26 terminant les tiges 27 des vérins 23 d'extrémités viennent prendre appui sur le fût 24 du disque 5.

On alimente les vérins d'extrémités 23 si bien que leurs tiges 27 sortent et écartent l'appareil 14 et ses mors 20 du fût 24.

Les mors 20 serrant les méplats 8 des ailettes 1 exercent un effort d'extraction de ces ailettes dans la direction radiale ce qui a pour effet de les extraire des rainures du disque 13 en brisant les restes des broches 7 enfilées dans les doigts 6 des pieds 2.

Le serrage des ailettes 1 sur leur méplat 8 n'endommage pas celles-ci. D'autre part l'extraction de toutes les ailettes 1 étant parfaitement radiale, on peut récupérer ce paquet 12 d'ailettes 1 et le réemployer après réparation du disque 5.

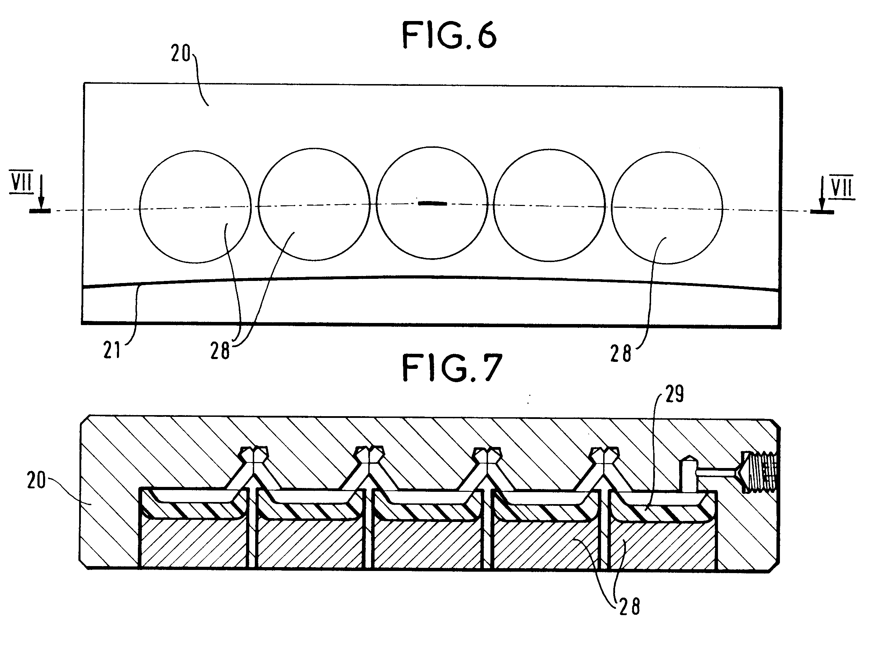

Selon une variante de l'invention représentée aux figures 6 et 7 chaque mors 20 comporte une série de pistons 28 munis de joints 29 manoeuvrés par un même liquide sous pression, un piston 28 par méplat. Le mors tel représenté comporte cinq pistons 28 et est donc destiné à extraire un paquet de cinq ailettes.

L'appareil 14 muni de tels mors 20 permet d'exercer des forces de serrage sur chaque méplat 8 même si, les faces des méplats des ailettes du paquet ne sont pas exactement dans les mêmes plans orthogonaux mais sont décallés latéralement les unes par rapport aux autres.

La pression avec laquelle les pistons 28 sont poussés est la même, si bien que, si la totalité de la surface du piston 28 s'applique sur la face du méplat 8, chaque méplat 8 est serré avec la même force.

L'extraction du paquet d'ailettes est ainsi facilitée.

Sur la figure 6 on a représenté le fond du décrochement 21 en forme de dièdre obtus.

## Revendications

1. Procédé pour extraire des paquets (12) d'ailettes (1) du type liées entre elles par des bandages (11), chaque ailette (1) comportant un pied (2) introductible radialement dans un disque (5) support pour y être fixé par des broches (7) et au-dessus du pied (2) un méplat (8) constitué de faces orthogonales à l'axe du disque (5), procédé dans lequel on élimine tout ou partie des broches (7) fixant les pieds (2) des ailettes (1) du paquet (12) au disque support caractérisé en ce qu'on vient ensuite serrer les méplats (8) des ailettes (1) avec une même force, puis en prenant appui sur le disque (5) on extrait radialement le paquet (12) d'ailettes (1) parallèlement aux méplats (8).

2. Appareil (14) pour la mise en oeuvre du procédé selon la revendication 1, comportant une pince munie de deux leviers (15) articulés autour d'un axe (16) comprenant chacun un bras arrière (18) et un bras avant (17), des moyens (19) pour écarter les bras arrière (18) l'un par rapport à l'autre de façon à rapprocher les bras avant (17) l'un vers l'autre, chaque bras avant (17) portant au voisinage de son extrémité un mors de serrage (20), les mors desdits bras avant étant situés en face l'un de l'autre et destinés au serrage de part et d'autre des méplats (8) des ailettes (1) à extraire et lesdits bras avant (17) étant munis de vérins (23) à leurs extrémités (22) permettant d'écarter l'appareil (14) des points d'appui (26) des vérins en restant dans un plan perpendiculaire à l'axe d'articulation (16).

3. Appareil selon la revendication 2, caractérisé en ce que les mors de serrage (20) comporte plusieurs pistons (28) disposés en série, un piston (28) de chaque mors (20) par ailette (1), lesdits pistons (28) étant poussés par un liquide à la même pression.

## Claims

1. A method of extracting packets (12) of blades (1) of the type interconnected by bands (11), each blade (1) comprising a foot (2) insertable radially into a support disk (5) in order to be fixed thereto by pegs (7), and also comprising a flat (8) above the foot (2) and constituted by faces which are orthogonal to the axis of the disk (5), the method being such that all or a portion of the pegs (7) fixing the feet (2) of the blades (1) of the packet (12) to the supporting disk are eliminated, characterized in that thereafter the flats (8) of the blades (1) are clamped with identical force, and subsequently the packet (12) of the blades (1) is radially extracted parallel to the flats (8) in using the disk (5) abutment.

2. Apparatus (14) for applying the method of claim 1, characterized in that it comprises a clamp provided with two levers (15) hinged about an axis (16), each lever comprising a rear arm (18) and a front arm (17), and comprising means (19) for moving the rear arms (18) apart from each other so as to move the front arms (17) towards each other, said front arms (17) carrying on each end clamping jaws (20) which face each other and which serve to clamp on the flats (8) of the blades (1) to be extracted, said front arms being provided with actuators (23) at their ends (22) enabling the apparatus (14) to be moved away from the bearing points (26) of the actuators while remaining in a plane perpendicular to the hinge axis (16).

3. Apparatus according to claim 2, characterized in that the clamping jaws (2) include a plurality of pistons (28) disposed side-by-side, each jaw (20) containing one piston (28) per blade (1), said pistons (28) being thrust by liquid at a common pressure.

## Patentansprüche

1. Verfahren zum Herausziehen der Pakete (12) von Schaufeln (1), die durch Bänder (11) verbunden sind und je Schaufel (1) einen Fuß (2), der radial in eine Tragscheibe (5) einführbar ist, um darin durch Stifte (7) befestigt zu werden, und oberhalb des Fußes (2) einen Flachbereich (8) aufweisen, der aus senkrecht zur Achse der Scheibe (5) verlaufenden Flächen besteht, wobei gemäß dem Verfahren alle oder ein Teil der Stifte (7), die zur Befestigung der Füße (2) der Schaufeln (1) des Paketes (12) an der Tragscheibe dienen, entfernt werden, dadurch gekennzeichnet, daß die Flachbereiche (8) der Schaufeln (1) anschließend mit gleicher Kraft eingeklemmt werden und das Paket (12) der Schaufeln (1) dann unter Abstützung auf der Scheibe (5) parallel zu den Flachbereichen (8) herausgezogen wird.

2. Gerät (14) zur Durchführung des Verfahrens nach Anspruch 1, mit einer Zange, die mit zwei um eine Achse (16) schwenkbar gelagerten Hebeln (15) versehen ist, die je einen hinteren Arm (18) und einen vorderen Arm (17) besitzen, und mit Mitteln (19) zum Entfernen der hinteren Arme (18) voneinander, derart, daß die vorderen Arme (17) einander angenähert werden, wobei jeder vordere Arm (17) in der Nähe seines Endes eine Klemmbacke (20) trägt und die Backen der vorderen Arme einander gegenüberstehen und auf beiden Seiten zum Einklemmen der Abflachungen (8) der herauszuziehenden Schaufeln bestimmt sind, und wobei die vorderen Arme (17) an ihren Enden (22) mit Hubzylindern (23) versehen sind, die das Gerät (14) von den Abstützpunkten (26) der Hubzylinder auf Abstand bringen, aber in einer senkrecht zur Schwenkachse (16) verlaufenden Ebene bleiben.

3. Gerät nach Anspruch 2, dadurch gekennzeichnet, daß die Klemmbacken (20) mehrere in Reihe angeordnete Kolben (28) aufweisen, nämlich in jeder Klemmbacke (20) einen Kolben (28) je Schaufel (1), wobei die Kolben mit gleichem Druck von einer Flüssigkeit beaufschlagt werden.
